# EUROPÄISCHE PATENTSCHRIFT

(11) **EP 4 327 452 B1**
(45) Veröffentlichungstag und Bekanntmachung des Hinweises auf die Patenterteilung: **10.09.2025**
(21) Anmeldenummer: 22734229.2
(22) Anmeldetag: 03.06.2022
(51) Int. Cl.: H02P 29/66, H02P 23/14

(54) **TEMPERATURBESTIMMUNGSVERFAHREN FÜR MAGNETTEMPERATUREN AN MAGNETEN ELEKTRISCHER MOTOREN**
TEMPERATURE DETERMINATION METHOD FOR MAGNET TEMPERATURES ON MAGNETS OF ELECTRIC MOTORS
PROCÉDÉ DE DÉTERMINATION DES TEMPÉRATURES D'AIMANTS DE MOTEURS ÉLECTRIQUES

(30) Priorität: 01.07.2021 EP 21183214
(43) Veröffentlichungstag der Anmeldung: 28.02.2024
(73) Patentinhaber: Siemens Aktiengesellschaft, 80333 München (DE)
(72) Erfinder: FRITSCH, Christoph, 96178 Pommersfelden (DE); KÜNZEL, Stefan, 91056 Erlangen (DE)
(74) Vertreter: Siemens Patent Attorneys
(86) Internationale Anmeldenummer: PCT/EP2022/065221
(87) Internationale Veröffentlichungsnummer: WO 2023/274664

(56) Entgegenhaltungen:
- DE-A1- 102015 005 555
- JP-A- 2009 261 182
- JP-A- 2017 175 878

## Beschreibung

Die Erfindung betrifft ein Temperaturbestimmungsverfahren für Magnettemperaturen an Magneten elektrischer Motoren mit Schritten in einem Testbetrieb und mit Schritten in einem Normalbetrieb.

Die Magnettemperatur von elektrischen Motoren, wie insbesondere von Synchronmotoren, ist im bestimmungsgemäßen betrieblichen Einsatz bei den Anwendern, hier im weiteren als Normalbetrieb bezeichnet, meist unbekannt oder zumindest sehr ungenau.

In der Regel sind **z.B.** an den Rotoren der Synchronmaschine keine Temperatursensoren zur Messung oder Ermittlung der Motortemperatur angeordnet. Falls jedoch eine entsprechende Temperaturmessungen vorgesehen sein sollte, ist eine Implementierung derartiger Temperatursensoren auf dem Rotor des Motors schwierig realisierbar und daher im Allgemeinen auch mit hohen Kosten verbunden.

In vielen Industriebranchen, beispielsweise aber auch im Bereich der Herstellung und des Betriebs elektrischer Fahrzeuge, ist für den Einsatz geeigneter Antriebssysteme die Kenntnis der Magnettemperatur des elektrischen Motors durchaus notwendig, da die Motormagneten abhängig von deren Temperatur eine unterschiedliche Remanenz aufweisen und sich daher auch die Drehmomentkonstante in Abhängigkeit zur Magnettemperatur ändert. Kennt man die Magnettemperatur, kann die Drehmomentberechnung einfach adaptiert werden.

Gängige Verfahren zur Temperaturbestimmung arbeiten z.B. mit Auswertung der EMK (Elektromotorischen Kraft) bei einer entsprechenden Drehzahl (als EMK wird auch die durch Drehung des elektrischen Motors induzierte Spannung bezeichnet), wobei damit auf die am Motormagneten anstehende Magnettemperatur geschlussfolgert werden kann. Auch gibt es weitere bekannte Verfahren, wie das einer Feldstrom-Signaleinprägungen, mittels derer ebenfalls die am Motormagneten anstehende Magnettemperatur ermittelt werden kann.

Alle dies Verfahren setzen jedoch voraus, dass sich die elektrische Maschine in einem drehenden Zustand befindet und zudem die Rotorlage der elektrischen Maschine bekannt ist. Sie sind demnach in der Implementierung und der Anwendung nur aufwendig zu realisieren.

Die JP 2009 261182 A lehrt eine Vorrichtung zur Abschätzung der Magnettemperatur für eine rotierende elektrische Maschine. Eine Drehmomentmessvorrichtung misst dazu das tatsächliche Drehmoment eines Motors bzw. Generators. Eine Vorrichtung zur Abschätzung des Drehmoments schätzt das Drehmoment des Motors / Generators, wann die Magnettemperatur des Motors / Generators eine Referenztemperatur ist, indem eine zuvor erstellte Strom-Drehmoment-Kurve verwendet wird. Die Magnettemperatur des Motors / Generators wird geschätzt basierend auf der Differenz einer Messung des Drehmoments und eines geschätzten Drehmoments unter Verwendung einer Magnettemperatur Kalkulationskennlinie, welche zuvor auf der Grundlage einer Temperaturkennlinie eines Dauermagnets ermittelt wurde.

Die DE 10 2015 005 555 A1 lehrt ein Verfahren zur Bestimmung einer Magnettemperatur einer permanent erregten elektrischen Maschine. Mittels des Verfahrens werden einer Magnettemperaturbeobachtereinheit zumindest ein gemessener Statorstrom der Maschine, eine in einem Umrichter der Maschine gebildete Statorspannung und eine gemessene Drehzahl der Maschine zugeführt. Eine Erfassung der Statorspannung erfolgt zur Laufzeit anhand eines Modells des Umrichters, wobei mittels der Magnettemperaturbeobachtereinheit aus den zugeführten Daten und unter Berücksichtigung einer Vorlauftemperatur eines Kühlmediums der Maschine ein Permanentmagnetfluss ermittelt wird und mittels der Magnettemperaturbeobachtereinheit aus einer Flussdifferenz zwischen dem Permanentmagnetfluss und einem einer Referenzmagnettemperatur zugeordneten und in dem Modell in zumindest einem Kennfeld hinterlegten Referenzfluss eine Temperaturdifferenz und aus dieser die absolute Magnettemperatur ermittelt wird. Zur Erzeugung des zumindest einen Kennfelds werden frequenzabhängige Einflüsse auf die Maschine offline bestimmt und in dem zumindest einen Kennfeld abgebildet.

Die JP 2017 175878 A lehrt ein Magnettemperatur-Schätzverfahren und eine Vorrichtung zur Abschätzung der Magnettemperatur eines Permanentmagneten eines elektrischen Motors, welcher aus einem Stator besteht, ausgestattet mit einer Spule, und aus einem Rotor mit dem Permanentmagneten. Der elektrische Motor wird mittels eines PWM-Wechselrichters betrieben. Das Verfahren besteht aus dem Schritt des Anlegens einer Wechselspannung mit Grundspannungsfrequenz und einem Schritt der Temperaturschätzung, wobei dafür die Impedanz Spannung und Strom gemessenen wird, welche durch die harmonischen Oberwellen der Grundfrequenz auftreten. Die Temperatur der Permanentmagnet wird entsprechend der gemessenen Impedanz geschätzt.

Der Erfindung liegt die Aufgabe zugrunde, ein gegenüber dem Stand der Technik verbessertes Temperaturbestimmungsverfahren für Magnettemperaturen an Magneten elektrischer Motoren vorzuschlagen, welches den Aufwand bei der Implementierung und der Anwendung zur Bestimmung der Magnettemperatur reduziert.

Die Aufgabe wird durch ein Temperaturbestimmungsverfahren mit den in Anspruch 1 angegebenen Merkmalen gelöst.

Für die Lösung der Aufgabe wird ein Temperaturbestimmungsverfahren für Magnettemperaturen an Magneten elektrischer Motoren vorgeschlagen, mit Schritten in einem Testbetrieb: Anlegung einer ersten Spannung an mindestens eine Testwicklung eines Testmotors mit Testmagneten zur Einprägung einer ersten Spannungszeitfläche bei ersten Winkeln eines Testmotordrehfelds, wobei die Testmagneten mit zumindest einer vorgegebenen Magnettemperatur beaufschlagt sind, Ermittlung erster Stromwerte bei den Testwinkeln und Speicherung der ersten Stromwerte in Abhängigkeit zu der zumindest einen vorgegebenen Magnettemperatur, und mit Schritten in einem Normalbetrieb: weitere Anlegung einer zweiten Spannung an mindestens eine Motorwicklung eines Einsatzmotors mit Motormagneten zur weiteren Einprägung einer zweiten Spannungszeitfläche bei zweiten Winkeln eines Motordrehfelds, wobei die Motormagneten eine betriebsbedingte Magnettemperatur aufweisen, weitere Ermittlung zweiter Stromwerte bei den zweiten Winkeln, weitere Speicherung der zweiten Stromwerte in Abhängigkeit zur betriebsbedingten Magnettemperatur und Temperaturbestimmung der betriebsbedingten Magnettemperatur mittels Vergleichs von zumindest einem der zweiten Stromwerte der betriebsbedingten Magnettemperatur mit zumindest einem der ersten Stromwerte der zumindest einen vorgegebenen Magnettemperatur.

Aufgrund der Sättigung im Eisen bzw. der induktiven Sättigung, sind Ströme, die in Wicklungen elektrischer Motoren in Magnetfeldrichtung fließen, also in Richtung zu den am elektrischen Motor angeordneten Magneten, größer als Ströme mit geringerer Ausrichtung zum Magnetfeld der Magneten bei der Einprägung von Spannungszeitflächen. Diese elektrische Beziehung macht es möglich, dass beispielsweise der Rotorlagewinkel des elektrischen Motors bestimmt werden kann.

Die Höhe der ermittelten Stromwerte ist von der Induktivität der Wicklung des elektrischen Motors in Verbindung mit dem Winkel des Drehfelds des elektrischen Motors abhängig. Falls der Testmotor baulich keine Veränderungen zu dem Einsatzmotor aufweist, ist die Höhe der in den Wicklungen des Testmotors und des Einsatzmotors maximal fließenden Ströme proportional zu den in die Testwicklung des Testmotors oder die Motorwicklung des Einsatzmotors eingeprägten Spannungszeitflächen und proportional zur Magnetfeldstärke der Testmagnete des Testmotors oder der Motormagnete des Einsatzmotors.

Das heißt, dass sich bei z.B. gleich eingeprägten Spannungszeitflächen die ermittelten maximalen Stromwerte bzw. die ermittelten Ströme bei den Winkeln nur noch in Abhängigkeit der Magnetfeldstärke, welche die Sättigung erzeugt, ändern. Die Magnetfeldstärke ist umgekehrt proportional zur Temperatur.

Das Temperaturbestimmungsverfahren wird mittels eines Testbetriebs und eines Normalbetriebs durchgeführt.

Der Testbetrieb wird üblicherweise in einer Testumgebung durchgeführt, welche meist nicht einem anwenderbezogenen Einsatzort entspricht. Jedoch umfasst ein derartiger Testbetrieb auch weitere Betriebsarten wie eine Inbetriebsetzung eines Antriebssystems oder einen Fehlersuchbetrieb. Der Testmotor repräsentiert dabei üblicherweise eine Motorbaureihe.

Im Normalbetrieb werden in der Regel Einsatzmotoren der Motorbaureihe anwendungsspezifisch betrieben. Somit werden im Normalbetrieb der oder die Einsatzmotoren beim Anwender bestimmungsgemäß benutzt. Testmotor und Einsatzmotor stammen vorteilhaft von einer Motorbaureihe ab, obwohl diese Motoren auch Unterschiede beispielsweise im konstruktiven Aufbau und der elektrischen Bemessung haben können.

Im Testbetrieb werden die Testmagneten an dem Testmotor einer Motorbaureihe bevorzugt mit verschiedenen vorgegebenen Magnettemperaturen beaufschlagt. Beaufschlagt bedeutet, dass die Testmagneten des Testmotors die beaufschlagte Magnettemperatur für den Testbetrieb annehmen.

Je nach Ausbildung des Testmotors, ein- oder mehrphasig, wird die erste Spannung an die mindestens eine Testwicklung des Testmotors zum Einprägen der ersten Spannungszeitfläche angelegt. Dies erfolgt bei ausgewählten ersten Winkeln eines Testmotordrehfelds des Testmotors, wobei sich die ersten Winkel über einen Winkelbereich erstrecken, der vorteilhaft 360° umfasst. Das Testmotordrehfeld des Testmotors ist ein elektrisches Drehfeld, wie es beispielsweise aus einer Raumzeigermodulation einer Vektorreglung zum Betrieb von elektrischen Motoren als statorfestes elektrisches Drehfeld bekannt ist.

Die erste Spannungszeitfläche wird derart gebildet, indem die erste Spannung über eine vorgegebene Zeit in einer vorgegebenen Höhe an die mindestens eine Testwicklung des Testmotors angelegt wird.

In der mindestens einen Testwicklung wird durch wiederholtes Einprägen der ersten Spannungszeitflächen bei den ersten Winkeln jeweils ein Stromfluss erzeugt, der als erster Stromwert ermittelt und auf einem ersten Speichermedium in Abhängigkeit zur vorgegebenen Magnettemperatur gespeichert werden.

Die Ermittlung des ersten Stromwerts kann derart erfolgen, dass der erste Stromwert **z.B.** an der mindestens einen Testwicklung des Testmotors gemessen wird oder rechnerisch durch weitere an dem Testmotor bestimmbarer elektrischer Größen ermittelt wird. Dies und weitere Aktivitäten zum Betrieb des Testmotors können mittels eines elektrischen Umrichters mit einer entsprechenden Steuerung- und Reglungseinheit erfolgen.

Im Normalbetrieb stellt sich für die Motormagneten des Einsatzmotors der Motorbaureihe die betriebsbedingte Magnettemperatur ein. Diese anfangs unbekannte betriebsbedingte Magnettemperatur wird nunmehr in vorteilhafter Art im Normalbetrieb durch das Temperaturermittlungsverfahren ermittelt, wobei die im Testbetrieb für die gemeinsame Motorbaureihe ermittelten und gespeicherten ersten Stromwerte in Abhängigkeit zur vorgegebenen Magnettemperatur benutzt werden.

Je nach Ausbildung des Einsatzmotors, ein- oder mehrphasig, wird die zweite Spannung an die mindestens eine Motorwicklung des Testmotors zum Einprägen der zweiten Spannungszeitfläche angelegt. Dies erfolgt bei ausgewählten zweiten Winkeln eines Motordrehfelds des Einsatzmotors, wobei sich die zweiten Winkel über den Winkelbereich erstrecken. Das Motordrehfeld des Einsatzmotors ist wie beim Testmotor ein elektrisches Drehfeld, wie es beispielsweise aus der Raumzeigermodulation der Vektorreglung zum Betrieb von elektrischen Motoren als statorfestes elektrisches Drehfeld bekannt ist.

Die zweite Spannungszeitfläche wird derart gebildet, indem die zweite Spannung über eine vorgegebene Zeit in einer vorgegebenen Höhe an die mindestens eine Motorwicklung des Einsatzmotors angelegt wird.

In der mindestens einen Motorwicklung wird durch wiederholtes Einprägen der zweiten Spannungszeitflächen bei den zweiten Winkeln jeweils ein Stromfluss erzeugt, der als zweiter Stromwert ermittelt und auf einem zweiten Speichermedium in Abhängigkeit zur betriebsbedingten Magnettemperatur gespeichert wird.

Die Ermittlung des zweiten Stromwerts kann derart erfolgen, dass der zweite Stromwert z.B. an der mindestens einen Motorwicklung des Einsatzmotors gemessen wird oder rechnerisch durch weitere an dem Einsatzmotor bestimmbare elektrische Größen ermittelt wird. Dies und weitere Aktivitäten zum Betrieb des Einsatzmotors können mittels eines elektrischen Umrichters mit einer entsprechenden Steuerung- und/oder Reglungseinheit erfolgen.

Grundsätzlich ist es vorteilhaft, dass das Temperaturbestimmungsverfahren, oder zumindest Teile davon, mittels einer Prozessoreinheit beispielsweise eines elektrischen Umrichters durchgeführt wird.

Aus den ersten Stromwerten für die mindestens eine vorgegebene Magnettemperatur wird ein erster maximaler Stromwert ermittelt und gespeichert, aus den zweiten Stromwerten für die betriebsbedingte Magnettemperatur wird ein zweiter maximaler Stromwert ermittelt und gespeichert und die Temperaturbestimmung der betriebsbedingten Magnettemperatur erfolgt mittels Vergleichs des zweiten maximalen Stromwerts der betriebsbedingten Magnettemperatur mit dem ersten maximalen Stromwert der zumindest einen vorgegebenen Magnettemperatur.

Die Temperaturbestimmung der betriebsbedingten Magnettemperatur erfolgt nun mittels Vergleichs von zumindest einem der gespeicherten zweiten Stromwerte der betriebsbedingten Magnettemperatur mit zumindest einem der gespeicherten ersten Stromwerte der zumindest einen vorgegebenen Magnettemperatur.

Vorteilhafte Ausgestaltungsformen des Ladestromverfahrens sind in den abhängigen Ansprüchen angegeben.

Bei einer weiteren vorteilhafte Ausgestaltungsform des Temperaturbestimmungsverfahrens ist die betriebsbedingte Magnettemperatur gleich der mindestens einen vorgegebenen Magnettemperatur, wenn der zweite maximale Stromwert gleich dem ersten maximalen Stromwert ist.

Bei dieser vorteilhaften Ausgestaltung ist die betriebsbedingte Magnettemperatur exakt bestimmbar.

Bei einer weiteren vorteilhafte Ausgestaltungsform des Temperaturbestimmungsverfahrens wird die betriebsbedingte Magnettemperatur zu der mindestens einen vorgegebenen Magnettemperatur abgeschätzt, wenn der zweite maximale Stromwert ungleich dem ersten maximalen Stromwert ist.

Diese Abschätzung erfolgt vorteilhaft z.B. auf Basis der Höhe des zweiten Stromwerts in Bezug zu dem ersten Stromwert und dies ggf. noch unter Kenntnis eines maximal zulässigen Stromwerts für die Motoren der Motobaureihe.

Bei einer weiteren vorteilhafte Ausgestaltungsform des Temperaturbestimmungsverfahrens wird aus den jeweils ersten maximalen Stromwerten mehrerer vorgegebener Magnettemperaturen eine Kennlinie gebildet und erfolgt die Temperaturbestimmung der betriebsbedingten Magnettemperatur mittels Vergleichs des zweiten maximalen Stromwerts der betriebsbedingten Magnettemperatur mit den jeweils ersten maximalen Stromwerten der Kennlinie in Abhängigkeit zu den mehreren vorgegebenen Magnettemperaturen.

In die Kennlinie können erste maximale Stromwerte für die mehreren vorgegebenen Magnettemperaturen eingetragen werden. Ein ermittelter zweiter Stromwert kann dann an den ersten maximalen Stromwerten der Kennlinie gespiegelt werden, wobei über den Vergleich zu den ersten maximalen Stromwerten, und deren Verknüpfung zu den jeweiligen vorgegebene Magnettemperaturen, die betriebsbedingten Magnettemperatur in vorteilhafter Weise bestimmt wird.

Die Kennlinie ist dabei sehr breit ausgelegt zu verstehen, so dass z.B. auch Tabellen oder vergleichbare Datenformate, insbesondere auch in elektronischer Form, unter den Begriff der Kennlinie fallen. Auch kann die Kennlinie eine Kurvenform annehmen.

Bei einer weiteren vorteilhafte Ausgestaltungsform des Temperaturbestimmungsverfahrens, wobei die betriebsbedingte Magnettemperatur gleich einer der mehreren vorgegebenen Magnettemperaturen ist, wenn der zweite maximale Stromwert gleich einem der ersten maximalen Stromwert der Kennlinie in Abhängigkeit zu einer der mehreren vorgegebenen Magnettemperaturen ist.

Bei dieser vorteilhaften Ausgestaltung ist die betriebsbedingte Magnettemperatur exakt bestimmbar.

Bei einer weiteren vorteilhafte Ausgestaltungsform des Temperaturbestimmungsverfahrens wird die betriebsbedingte Magnettemperatur in Bezug zu einer Nächstliegenden der mehreren vorgegebenen Magnettemperaturen abgeschätzt, wenn der zweite maximale Stromwert ungleich zu den ersten maximalen Stromwerten der Kennlinie in Abhängigkeit zu den mehreren vorgegebenen Magnettemperaturen ist.

Diese Abschätzung kann beispielsweise vorteilhaft erfolgen, indem der zweite maximale Stromwert zwischen den bekannten ersten maximalen Stromwerten interpoliert wird.

Bei einer weiteren vorteilhafte Ausgestaltungsform des Temperaturbestimmungsverfahrens wird der Testbetrieb im Stillstand des Testmotors und der Normalbetrieb im Stillstand des Einsatzmotors durchgeführt.

Dieses Ausgestaltungsbeispiel ist besonders vorteilhaft, da insbesondere der ggf. schon in einer Anlage verbaute Einsatzmotor nicht gedreht werden muss, demnach eventuell eine an den Einsatzmotor angeschlossene Last nicht bewegt werden muss. Gleiches gilt analog auch für den Testbetrieb, so dass im Testbetrieb auch Betriebsgefahren, welche sonst beim Einsatz rotierender oder sich anders bewegender elektrischer Maschinen auftreten könnte, geringer sind. Grundsätzlich ist der Betriebsaufwand im Stillstand der Motoren geringer als bei rotierenden Motoren.

Auch benötigt das Temperaturbestimmungsverfahren - sowohl im Testbetrieb des Testmotors wie auch im Normalbetrieb des Einsatzmotors - keine Informationen über eine Rotorlage des jeweiligen Motors.

Bei einer weiteren vorteilhafte Ausgestaltungsform des Temperaturbestimmungsverfahrens sind die Testmagneten des Testmotors und die Motormagneten des Einsatzmotors als Permanentmagneten ausgebildet.

Der Einsatz von Permanentmagneten in beispielsweise Synchronmotoren bietet gegenüber Motoren mit einem fremderregt gebildeten Magneten sowohl aus konstruktiv baulicher Sicht - kleinerer Bauraum, weniger Motorkomponenten - wie auch aus elektrischer Sicht - keine separate Energie zur Erzeugung des Magnetfelds notwendig - Vorteile.

Bei einer weiteren vorteilhafte Ausgestaltungsform des Temperaturbestimmungsverfahrens ist die zweite Spannungszeitfläche im Normalbetrieb gleich der ersten Spannungszeitfläche im Testbetrieb ist.

Sind die eingeprägte erste und zweite Spannungszeitfläche zur Ausbildung und Ermittlung der ersten und zweiten Stromwerte im Testbetrieb versus Normalbetrieb gleich, wird die Genauigkeit zur Bestimmung der betriebsbedingten Magnettemperatur des Normalbetriebs vorteilhaft gesteigert gegenüber dem Einsatz mit verschiedenen ersten und zweiten Spannungszeitflächen.

Es bestehen demnach aus Sicht der eingeprägten Spannungszeitflächen die gleichen elektrischen Bedingungen.

Bei einer weiteren vorteilhafte Ausgestaltungsform des Temperaturbestimmungsverfahrens sind die ersten Winkel in Anzahl und jeweiligen Winkelwerten gleich den zweiten Winkeln.

Sind die ersten und zweiten Winkel für die Einprägung der Spannungszeitflächen in Anzahl und jeweiligen Winkelwerten zur Ausbildung und Ermittlung der ersten und zweiten Stromwerte im Testbetrieb versus Normalbetrieb gleich, wird die Genauigkeit zur Bestimmung der betriebsbedingten Magnettemperatur des Normalbetriebs vorteilhaft gesteigert gegenüber dem Einsatz mit einer unterschiedlichen Anzahl und unterschiedlichen jeweiligen Winkelwerten der ersten und zweiten Winkel.

Es bestehen demnach aus Sicht der Einprägung der Spannungszeitflächen bei den ersten und zweiten Winkeln die gleichen elektrischen Bedingungen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung des erfindungsgemäßen Temperaturbestimmungsverfahrens mittels eines Struktogramms,
- FIG 2: eine schematische Darstellung eines Motormodels für einen Testmotor im Testbetrieb und einen Einsatzmotor im Normalbetrieb für das erfindungsgemäße Temperaturbestimmungsverfahren gemäß FIG **1****,**
- FIG 3: ein schematisches Diagramm zur Ermittlung einer betriebsbedingten Magnettemperatur für das erfindungsgemäße Temperaturbestimmungsverfahren gemäß FIG 1 oder 2 und
- FIG 4: ein schematisches Diagramm mit einem im Normalbetrieb ermittelten Stromverlauf zweiter Stromwerte in Abhängigkeit von ermittelten betriebsbedingten Temperaturen.

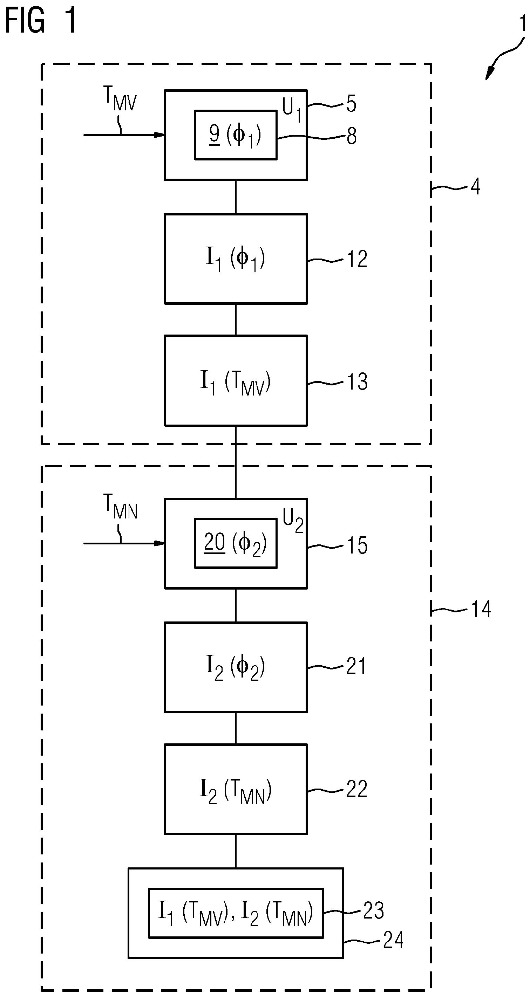

Die FIG 1 zeigt eine schematische Darstellung des erfindungsgemäßen Temperaturbestimmungsverfahrens 1 mittels eines Struktogramms.

Temperaturbestimmungsverfahren 1 findet Anwendung bei der Bestimmung von Magnettemperaturen an Magneten elektrischer Motoren.

In einem Testbetrieb 4 des Temperaturbestimmungsverfahrens 1 werden die nachfolgenden Schritte durchgeführt.

Mit Anlegung 5 einer ersten Spannung U₁ an mindestens eine Testwicklung eines Testmotors 7 mit Testmagneten 11 erfolgt eine Einprägung 8 einer ersten Spannungszeitfläche 9 bei ersten Winkeln ϕ₁ eines Testmotordrehfelds.

Die Testmagneten 11 sind dazu zumindest mit einer vorgegebenen Magnettemperatur T_{MV} beaufschlagt.

Eine Ermittlung 12 erster Stromwerte I₁ bei den ersten Winkeln ϕ₁ wird durchgeführt und es erfolgt eine Speicherung 13 der ersten Stromwerte I₁ in Abhängigkeit zu der zumindest einen vorgegebenen Magnettemperatur T_{MV}.

Die Schritte des Testbetriebs können dabei wiederholt werden, um für weitere vorgegebene Magnettemperatur T_{MV} entsprechende erste Stromwerte in Abhängigkeit zu den jeweiligen vorgegebenen Magnettemperatur T_{MV} zu ermitteln und zu speichern.

In einem Normalbetrieb 14 des Temperaturbestimmungsverfahrens 1 werden die nachfolgenden Schritte durchgeführt.

Mit einer weiteren Anlegung 15 einer zweiten Spannung U₂ an mindestens eine Motorwicklung eines Einsatzmotors mit Motormagneten 18 erfolgt eine weitere Einprägung 19 einer zweiten Spannungszeitfläche 20 bei zweiten Winkeln ϕ₂ eines Einsatzmotordrehfelds.

Die Motormagneten weisen hier eine betriebsbedingte Magnettemperatur T_{MN} auf, welche sich im Normalbetrieb 14 an den Motormagneten entsprechend einstellt.

Eine weitere Ermittlung 21 zweiter Stromwerte I₂ bei den zweiten Winkeln ϕ₂ wird durchgeführt und es erfolgt eine weitere Speicherung 22 der zweiten Stromwerte I₂ in Abhängigkeit zur betriebsbedingten Magnettemperatur T_{MN}.

Eine Temperaturbestimmung 23 der betriebsbedingten Magnettemperatur T_{MN} wird mittels eines Vergleichs 24 von zumindest einem der zweiten Stromwerte I₂ der betriebsbedingten Magnettemperatur T_{MN} mit zumindest einem der ersten Stromwerte I₁ der zumindest einen vorgegebenen Magnettemperatur T_{MV} durchgeführt.

Zur weiteren Ausbildung des Temperaturbestimmungsverfahrens 1 sind nachfolgend ergänzende Schritte aufgezeigt, welche nicht oder nicht vollständig in FIG 1 dargestellt sind.

Aus den ersten Stromwerten I₁ für die mindestens eine vorgegebene Magnettemperatur T_{MV} wird ein erster maximaler Stromwert ermittelt und gespeichert und aus den zweiten Stromwerten I₂ für die betriebsbedingte Magnettemperatur T_{MN} wird ein zweiter maximaler Stromwert ermittelt und gespeichert.

Im Fall der ermittelten maximalen Stromwerte erfolgt die Temperaturbestimmung 23 der betriebsbedingten Magnettemperatur T_{MN} mittels Vergleichs 24 des zweiten maximalen Stromwerts der betriebsbedingten Magnettemperatur T_{MN} mit dem ersten maximalen Stromwert der zumindest einen vorgegebenen Magnettemperatur T_{MV}.

Ist dazu der zweite maximale Stromwert ungleich dem ersten maximalen Stromwert wird die betriebsbedingte Magnettemperatur T_{MN} in Bezug zu der mindestens einen vorgegebenen Magnettemperatur T_{MV}.

Aus den jeweils ersten maximalen Stromwerten mehrerer vorgegebener Magnettemperaturen T_{MV} kann auch eine Kennlinie gebildet werden. Die Temperaturbestimmung 23 der betriebsbedingten Magnettemperatur T_{MN} erfolgt dann mittels Vergleichs 24 des zweiten maximalen Stromwerts der betriebsbedingten Magnettemperatur T_{MN} mit den jeweils ersten maximalen Stromwerten der Kennlinie in Abhängigkeit zu den mehreren vorgegebenen Magnettemperaturen T_{MV}.

Wenn an dieser Stelle der zweite maximale Stromwert ungleich zu den jeweils ersten maximalen Stromwerten der Kennlinie in Abhängigkeit zu den mehreren vorgegebenen Magnettemperaturen T_{MV} ist, wird die betriebsbedingte Magnettemperatur T_{MN} zu einer Nächstliegenden der mehreren vorgegebenen Magnettemperaturen T_{MV} abgeschätzt. Zur Abschätzung können Interpolationsverfahren zum Einsatz kommen.

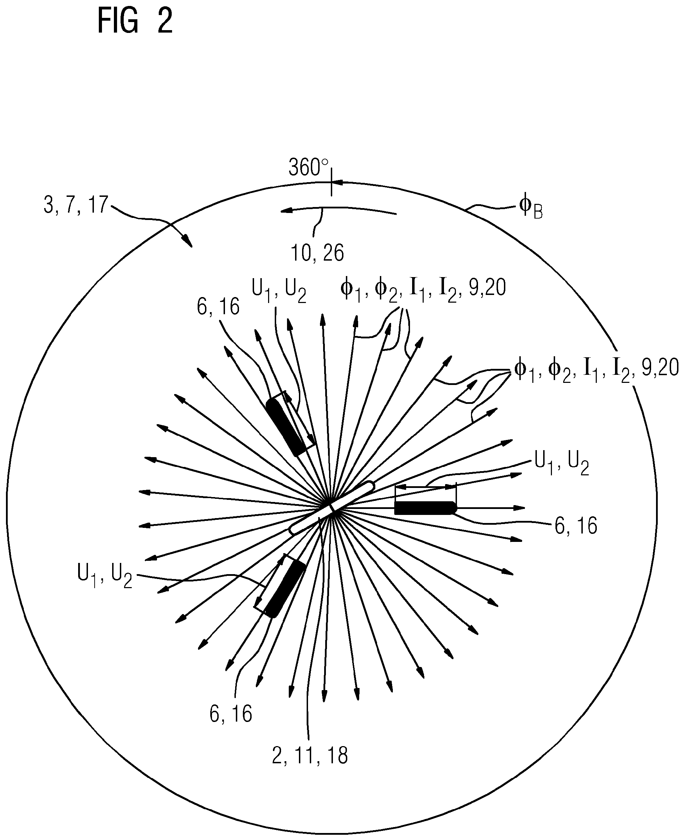

In FIG 2 wird eine schematische Darstellung eines Motormodels aufgezeigt, welches sowohl einen Testmotor 7 im Testbetrieb wie auch einen Einsatzmotor 17 im Normalbetrieb jeweils als Motor 3 für das erfindungsgemäße Temperaturbestimmungsverfahren gemäß FIG 1 beschreibt.

Schematisch sind um Magnete 2 des Motors 2 drei Wicklung, bei Betrachtung des Testmotors 7 drei Testwicklungen 6 bzw. bei Betrachtung des Einsatzmotors 17 drei Motorwicklungen 16, hier im Sinne eines dreiphasigen Drehstrommotors, angeordnet.

Analog zur Beschreibung der FIG 1 werden an diese Wicklungen 6,16 für den Testbetrieb an die Testwicklungen 6 jeweils die erste Spannung U₁ und für den Normalbetrieb an die Motorwicklung 16 jeweils die zweite Spannung U₂ angelegt.

Über einen Winkelbereich ϕ_{B} von hier 360° wird an den ersten Winkeln ϕ₁ im Testbetrieb jeweils die erste Spannungszeitfläche 9 in die Testwicklung 6 eingeprägt und jeweils der erste Stromwert I₁ ermittelt. Vergleichbar wird über den Winkelbereich ϕ_{B} an den zweiten Winkeln ϕ₂ im Normalbetrieb jeweils die zweite Spannungszeitfläche 20 in die Testwicklung 16 eingeprägt und jeweils der zweite Stromwert I₂ ermittelt.

Die ersten Winkel ϕ₁ beschreiben ein Testmotordrehfeld 10 als statorfestes elektrisches Drehfeld des Testmotors 7 im Testbetrieb und die zweiten Winkel ϕ₂ beschreiben ein Motordrehfeld 26 als statorfestes elektrisches Drehfeld des Einsatzmotors 17 im Normalbetrieb.

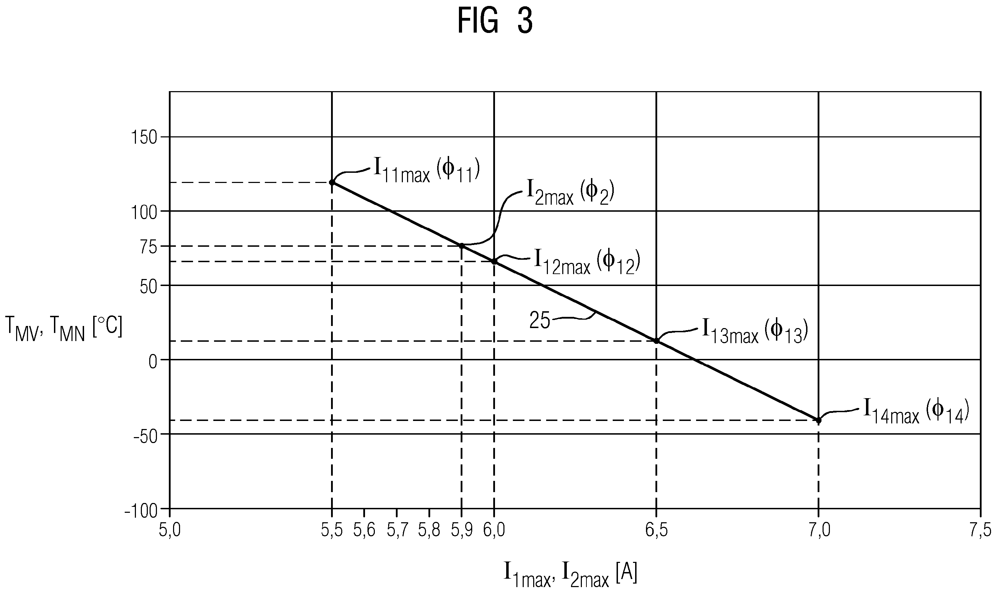

Mit der FIG 3 wird ein schematisches Diagramm zur Ermittlung einer betriebsbedingten Magnettemperatur T_{MN} für das erfindungsgemäße Temperaturbestimmungsverfahren 1gemäß FIG 1 oder 2 dargestellt.

Eine erste Koordinatenachse des Diagramms zeigt die vorgegebene Magnettemperatur T_{MV} und die betriebsbedingte Magnettemperatur T_{MN} als Temperatur in °C aufgetragen über eine zweite Koordinatenachse von ersten maximalen Stromwerten I₁ₘₐₓ und zweiten maximalen Stromwerten I₂ₘₐₓ als Strom in A.

Im Testbetrieb jeweils in Abhängigkeit der vorgegebene Magnettemperatur ermittelte erste maximale Stromwerte I₁ₘₐₓ - maximaler erster Stromwert I₁₁ₘₐₓ, maximaler zweiter Stromwert I₁₂ₘₐₓ, maximaler dritter Stromwert I₁₃ₘₐₓ und maximaler vierter Stromwert I₁₄ₘₐₓ - bilden die Kennlinie 25.

Dazu wurde im Normalbetrieb ein zweiter maximaler Stromwert I₂ₘₐₓ ermittelt, welcher an der Kennlinie 25 gespiegelt wird. Der zweite maximalen Stromwert I₂ₘₐₓ - hier mit 5,9 A - ergibt eine auf der ersten Koordinatenachse ablesbare Temperatur von gezeigt 75°C.

Der maximale erste Stromwert I₁₁ₘₐₓ wurde bei einem ersten Winkelwert ϕ₁₁ der ersten Winkel ϕ₁, der maximale zweite Stromwert I₁₂ₘₐₓ bei einem zweiten Winkelwert ϕ₁₂ der ersten Winkel ϕ₁, der maximale dritte Stromwert I₁₃ₘₐₓ bei einem dritten Winkelwert ϕ₁₃ der ersten Winkel ϕ₁ und der maximale vierte Stromwert I₁₄ₘₐₓ bei einem vierten Winkelwert ϕ₁₄ der ersten Winkel ϕ₁ ermittelt.

Der zweite maximale Stromwerten I₂ₘₐₓ wurde bei dem zweiten Winkel ϕ₂ ermittelt.

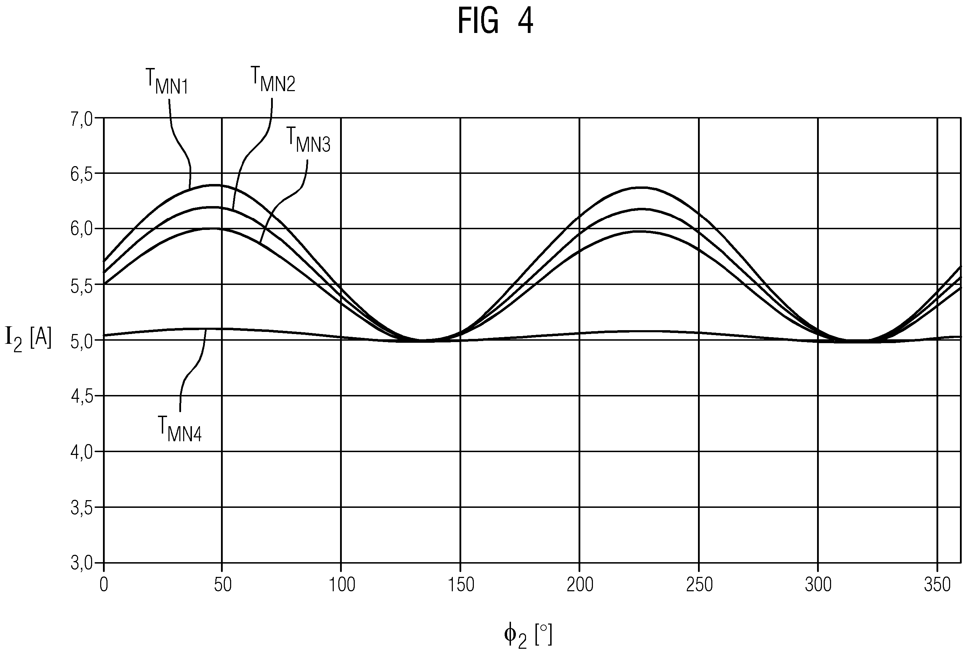

Die FIG 4 zeigt ein schematisches Diagramm mit im Normalbetrieb ermittelten Stromverläufen zweiter Stromwerte I₂ in Abhängigkeit von ermittelten betriebsbedingten Magnettemperaturen T_{MN1}, T_{MN2}, T_{MN3}, T_{MN4}.

Eine erste Koordinatenachse des Diagramms zeigt zweite Stromwerte I₂ als Ströme in A, aufgetragen über eine zweite Koordinatenachse mit zweiten Winkeln ϕ₂, an denen die zweiten Stromwerte I₂ im Normalbetrieb ermittelt wurden.

Im Ergebnis des Diagramms sind die im Normalbetrieb ermittelten betriebsbedingten Magnettemperatur in Form von Kurven eines Temperaturverlaufs einer ersten betriebsbedingten Magnettemperatur T_{MN1} über einer zweiten betriebsbedingten Magnettemperatur T_{MN2}, einer dritten betriebsbedingten Magnettemperatur T_{MN3} und einer vierten betriebsbedingten Magnettemperatur T_{MN4} aufgezeigt.

Aus der Höhe der Kurvenverläufe der jeweiligen betriebsbedingten Magnettemperaturen T_{MV1}, T_{MV2}, T_{MV3}, T_{MV4} lässt sich bestimmen, von welcher aktuellen Güte der Magnetismus der Motormagnete des Einsatzmotors im Normalbetrieb ist.

So zeigt der Kurvenverlauf der vierten betriebsbedingten Magnettemperatur T_{MN4} einen deutlichen Verlust des Magnetismus bei dieser vierten betriebsbedingten Magnettemperatur T_{MN4}.

## Patentansprüche

1. Temperaturbestimmungsverfahren (1) für Magnettemperaturen an Magneten (2) elektrischer Motoren (3), mit Schritten in einem Testbetrieb (4)
- Anlegung (5) einer ersten Spannung (U₁) an mindestens eine Testwicklung (6) eines Testmotors (7) mit Testmagneten (11) zur Einprägung (8) einer ersten Spannungszeitfläche (9) bei ersten Winkeln (ϕ₁) eines Testmotordrehfelds (10), wobei die Testmagneten (11) mit zumindest einer vorgegebenen Magnettemperatur (T_{MV}) beaufschlagt sind,
- Ermittlung (12) erster Stromwerte (I₁) bei den ersten Winkeln (ϕ₁) und
- Speicherung (13) der ersten Stromwerte (I₁) in Abhängigkeit zur zumindest einen vorgegebenen Magnettemperatur (T_{MV}), und mit Schritten in einem Normalbetrieb (14)
- weitere Anlegung (15) einer zweiten Spannung (U₂) an mindestens eine Motorwicklung (16) eines Einsatzmotors (17) mit Motormagneten (18) zur weiteren Einprägung (19) einer zweiten Spannungszeitfläche (20) bei zweiten Winkeln (ϕ₂) eines Einsatzmotordrehfelds (26), wobei die Motormagneten (18) eine betriebsbedingte Magnettemperatur (T_{MN}) aufweisen,
- weitere Ermittlung (21) zweiter Stromwerte (I₂) bei den zweiten Winkeln (ϕ₂),
- weitere Speicherung (22) der zweiten Stromwerte (I₂) in **Ab**hängigkeit zur betriebsbedingten Magnettemperatur (T_{MN}),
- Temperaturbestimmung (23) der betriebsbedingten Magnettemperatur (T_{MN}) mittels Vergleichs (24) von zumindest einem der zweiten Stromwerte (I₂) der betriebsbedingten Magnettemperatur (T_{MN}) mit zumindest einem der ersten Stromwerte (I₁) der zumindest einen vorgegebenen Magnettemperatur (T_{MV}), **dadurch gekennzeichnet, dass** aus den ersten Stromwerten (I₁) für die mindestens eine vorgegebene Magnettemperatur (T_{MV}) ein erster maximaler Stromwert (I₁ₘₐₓ) ermittelt und gespeichert wird,
- aus den zweiten Stromwerten (I₂) für die betriebsbedingte Magnettemperatur (T_{MN}) ein zweiter maximaler Stromwert (I₂ₘₐₓ) ermittelt und gespeichert wird und
- die Temperaturbestimmung (23) der betriebsbedingten Magnettemperatur (T_{MN}) mittels Vergleichs (24) des zweiten maximalen Stromwerts (I₂ₘₐₓ) der betriebsbedingten Magnettemperatur (T_{MN}) mit dem ersten maximalen Stromwert (I₁ₘₐₓ) der zumindest einen vorgegebenen Magnettemperatur (T_{MV}) erfolgt.

2. Temperaturbestimmungsverfahren (1) nach Anspruch 1, wobei die betriebsbedingte Magnettemperatur (T_{MN}) gleich der mindestens einen vorgegebenen Magnettemperatur (T_{MV}) ist, wenn der zweite maximale Stromwert (I₂ₘₐₓ) gleich dem ersten maximalen Stromwert (I₁ₘₐₓ) ist.

3. Temperaturbestimmungsverfahren (1) nach Anspruch 1, wobei die betriebsbedingte Magnettemperatur (T_{MN}) zu der mindestens einen vorgegebenen Magnettemperatur (T_{MV}) abgeschätzt wird, wenn der zweite maximale Stromwert (I₂ₘₐₓ) ungleich dem ersten maximalen Stromwert (I₁ₘₐₓ) ist.

4. Temperaturbestimmungsverfahren (1) nach Anspruch 1, wobei aus den jeweils ersten maximalen Stromwerten (I₁ₘₐₓ) mehrerer vorgegebener Magnettemperaturen (T_{MV}) eine Kennlinie (25) gebildet wird und wobei die Temperaturbestimmung (23) der betriebsbedingten Magnettemperatur (T_{MN}) mittels Vergleichs (24) des zweiten maximalen Stromwerts (I₂ₘₐₓ) der betriebsbedingten Magnettemperatur (T_{MN}) mit den jeweils ersten maximalen Stromwerten (I₁ₘₐₓ) der Kennlinie (25) in Abhängigkeit zu den mehreren vorgegebenen Magnettemperaturen (T_{MV}) erfolgt.

5. Temperaturbestimmungsverfahren (1) nach Anspruch 4, wobei die betriebsbedingte Magnettemperatur (T_{MN}) gleich einer der mehreren vorgegebenen Magnettemperaturen (T_{MV}) ist, wenn der zweite maximale Stromwert (I₂ₘₐₓ) gleich einem ersten maximalen Stromwert (I₁ₘₐₓ) der Kennlinie (25) in Abhängigkeit zu einer der mehreren vorgegebenen Magnettemperaturen (T_{MV}) ist.

6. Temperaturbestimmungsverfahren (1) nach Anspruch 4, wobei die betriebsbedingte Magnettemperatur (T_{MN}) zu einer Nächstliegenden der mehreren vorgegebenen Magnettemperaturen (T_{MV}) abgeschätzt wird, wenn der zweite maximale Stromwert (I₂ₘₐₓ) ungleich zu den jeweils ersten maximalen Stromwerten (I₁ₘₐₓ) der Kennlinie (25) in Abhängigkeit zu den mehreren vorgegebenen Magnettemperaturen (T_{MV}) ist.

7. Temperaturbestimmungsverfahren (1) nach einem der vorhergehenden Ansprüche, wobei der Testbetrieb (4) im Stillstand des Testmotors (7) und der Normalbetrieb (14) im Stillstand des Einsatzmotors (17) durchgeführt wird.

8. Temperaturbestimmungsverfahren (1) nach einem der vorhergehenden Ansprüche, wobei die Testmagneten (11) des Testmotors (7) und die Motormagneten (18) des Einsatzmotors (17) als Permanentmagneten ausgebildet sind.

9. Temperaturbestimmungsverfahren (1) nach einem der vorhergehenden Ansprüche, wobei die zweite Spannungszeitfläche (20) im Normalbetrieb (14) gleich der ersten Spannungszeitfläche (9) im Testbetrieb (4) ist.

10. Temperaturbestimmungsverfahren (1) nach einem der vorhergehenden Ansprüche, wobei die ersten Winkel (ϕ₁) in Anzahl und jeweiligen Winkelwerten gleich den zweiten Winkeln (ϕ₂) sind.

## Claims

1. Temperature determination method (1) for magnet temperatures on magnets (2) of electric motors (3), comprising the following steps in test mode (4)
- application (5) of a first voltage (U₁) to at least one test winding (6) of a test motor (7) with test magnets (11) to impress (8) a first voltage-time area (9) at first angles (ϕ₁) of a test motor rotating field (10), wherein the test magnets (11) are subjected to at least one predefined magnet temperature (T_{MV}),
- determining (12) first current values (I₁) at the first angles (ϕ₁) and
- storing (13) the first current values (I₁) as a function of the at least one predefined magnet temperature (T_{MV}),
and the following steps in normal mode (14)
- subsequently applying (15) a second voltage (U2) to at least one motor winding (16) of an operational motor (17) with motor magnets (18) to subsequently impress (19) a second voltage-time area (20) at second angles (ϕ₂) of an operational motor rotating field (26), wherein the motor magnets (18) have an operation-dependent magnet temperature (T_{MN}),
- subsequently determining (21) second current values (I₂) at the second angles (ϕ₂),
- subsequently storing (22) the second current values (I₂) as a function of the operation-dependent magnet temperature (T_{MN}) and
- temperature determination (23) of the operation-dependent magnet temperature (T_{MN}) by comparing (24) at least one of the second current values (I₂) of the operation-dependent magnet temperature (T_{MN}) with at least one of the first current values (I₁) of the at least one predefined magnet temperature (T_{MV}), **characterised in that**
- a first maximum current value (I₁ₘₐₓ) is determined from the first current values (I₁) for the at least one predefined magnet temperature (T_{MV}) and stored,
- a second maximum current value (I₂ₘₐₓ) is determined from the second current values (I₂) for the operation-dependent magnet temperature (T_{MN}) and stored, and
- the temperature determination (23) of the operation-dependent magnet temperature (T_{MN}) is carried out by comparing (24) the second maximum current value (I₂ₘₐₓ) of the operation-dependent magnet temperature (T_{MN}) with the first maximum current value (I₁ₘₐₓ) of the at least one predefined magnet temperature (T_{MV}).

2. Temperature determination method (1) according to claim 1, wherein the operation-dependent magnet temperature (T_{MN}) is equal to the at least one predefined magnet temperature (T_{MV}) when the second maximum current value (I₂ₘₐₓ) is equal to the first maximum current value (I₁ₘₐₓ).

3. Temperature determination method (1) according to claim 1, wherein the operation-dependent magnet temperature (T_{MN}) is estimated at the at least one predefined magnet temperature (T_{MV}) if the second maximum current value (I₂ₘₐₓ) is not equal to the first maximum current value (I₁ₘₐₓ).

4. Temperature determination method (1) according to claim 1, wherein a characteristic (25) is formed from the respective first maximum current values (I₁ₘₐₓ) of a plurality of predefined magnet temperatures (T_{MV}) and wherein the temperature determination (23) of the operation-dependent magnet temperature (T_{MN}) is carried out by comparing (24) the second maximum current value (I₂ₘₐₓ) of the operation-dependent magnet temperature (T_{MN}) with the respective first maximum current values (I₁ₘₐₓ) of the characteristic (25) as a function of the plurality of predefined magnet temperatures (T_{MV}).

5. Temperature determination method (1) according to claim 4, wherein the operation-dependent magnet temperature (T_{MN}) is equal to one of the plurality of predefined magnet temperatures (T_{MV}) if the second maximum current value (I₂ₘₐₓ) is equal to a first maximum current value (I₁ₘₐₓ) of the characteristic (25) as a function of one of the plurality of predefined magnet temperatures (T_{MV}).

6. Temperature determination method (1) according to claim 4, wherein the operation-dependent magnet temperature (T_{MN}) is estimated at a closest of the plurality of predefined magnet temperatures (T_{MV}) if the second maximum current value (I₂ₘₐₓ) is not equal to the respective first maximum current values (I₁ₘₐₓ) of the characteristic (25) as a function of the plurality of predefined magnet temperatures (T_{MV}).

7. Temperature determination method (1) according to one of the preceding claims, wherein test mode (4) is carried out when the test motor (7) is at rest and normal mode (14) is carried out when the operational motor (17) is at rest.

8. Temperature determination method (1) according to one of the preceding claims, wherein the test magnets (11) of the test motor (7) and the motor magnets (18) of the operational motor (17) are designed as permanent magnets.

9. Temperature determination method (1) according to one of the preceding claims, wherein the second voltage-time area (20) in normal mode (14) is equal to the first voltage-time area (9) in test mode (4).

10. Temperature determination method (1) according to one of the preceding claims, wherein the first angles (ϕ₁) are equal in number and respective angular values to the second angles (ϕ₂).

## Revendications

1. Procédé (1) de détermination de la température d'aimant (2) de moteurs (3) électriques, comprenant des stades dans un fonctionnement (4) de test
- application (5) d'une première tension (U₁) à au moins un enroulement (6) de test d'un moteur (7) de test ayant des aimants (11) de test pour l'impression (8) d'une première surface (9) tension temps à de premiers angles (ϕ₁) d'un champ (10) tournant de moteur de test, les aimants (11) de test étant soumis à au moins une température (T_{MV}) d'aimant donnée à l'avance,
- détermination (12) de premières valeurs (I₁) de courant aux premiers angles (ϕ₁) et
- mise (13) en mémoire des premières valeurs (I₁) de courant en fonction d'au moins une température (T_{MV}) d'aimant donnée à l'avance,
et comprenant des stades dans un fonctionnement (14) normal
- autre application (15) d'une deuxième tension (U₂) à au moins un enroulement (16) d'un moteur (17) en service ayant des aimants (18) de moteur pour l'autre impression (19) d'une deuxième surface (20) tension temps à des deuxièmes angles (ϕ₂) d'un champ (26) tournant de moteur en service, dans lequel les aimants (18) de moteur ont une température (T_{MN}) d'aimant due au fonctionnement,
- autre détermination (21) de deuxièmes valeurs (I₂) de courant aux deuxièmes angles (ϕ₂),
- autre mise (22) en mémoire des deuxièmes valeurs (I₂) de courant en fonction de la température (T_{MN}) d'aimant due au fonctionnement,
- détermination (23) de la température (T_{MN}) d'aimant due au fonctionnement au moyen d'une comparaison (24) d'au moins l'une des deuxièmes valeurs (I₂) de courant à la température (T_{MN}) d'aimant due au fonctionnement à au moins l'une des premières valeurs (I₁) de courant à la au moins une température (T_{MV}) d'aimant donnée à l'avance, **caractérisé en ce que**, à partir des premières valeurs (I₁) de courant pour la au moins une température (T_{MV}) d'aimant donnée à l'avance, on détermine et on met en mémoire une première valeur (I₁ₘₐₓ) maximum de courant,
- à partir des deuxièmes valeurs (I₂) de courant pour la température (T_{MN}) d'aimant due au fonctionnement, on détermine et on met en mémoire une deuxième valeur (I₂ₘₐₓ) maximum de courant et
- la détermination (23) de la température (T_{MN}) d'aimant due au fonctionnement s'effectue au moyen d'une comparaison (24) de la deuxième valeur (I₂ₘₐₓ) maximum de courant à la température (T_{MN}) d'aimant due au fonctionnement à la première valeur (I₁ₘₐₓ) maximum de courant à la au moins une température (T_{MV}) d'aimant donnée à l'avance.

2. Procédé (1) de détermination de la température suivant la revendication 1, dans lequel la température (T_{MN}) d'aimant due au fonctionnement est égale à la au moins une température (T_{MV}) d'aimant donnée à l'avance, si la deuxième valeur (I₂ₘₐₓ) maximum de courant est égale à la première valeur (I₁ₘₐₓ) maximum de courant.

3. Procédé (1) de détermination de la température suivant la revendication 1, dans lequel on estime la température (T_{MN}) d'aimant due au fonctionnement comme étant la au moins une température (T_{MV}) d'aimant donnée à l'avance, si la deuxième valeur (I₂ₘₐₓ) maximum de courant est inégale à la première valeur (I₁ₘₐₓ) maximum de courant.

4. Procédé (1) de détermination de la température suivant la revendication 1, dans lequel, à partir des premières valeurs (I₁ₘₐₓ) maximum de courant respectives à plusieurs températures (T_{MV}) d'aimant données à l'avance, on forme une courbe (25) caractéristique, et dans lequel la détermination (23) de la température (T_{MN}) d'aimant due au fonctionnement s'effectue au moyen d'une comparaison (24) de la deuxième valeur (I₂ₘₐₓ) maximum de courant à la température (T_{MN}) d'aimant due au fonctionnement aux premières valeurs (I₁ₘₐₓ) maximum de courant respectives de la courbe (25) caractéristique en fonction des plusieurs températures (T_{MV}) d'aimant données à l'avance.

5. Procédé (1) de détermination de la température suivant la revendication 4, dans lequel la température (T_{MN}) d'aimant due au fonctionnement est égale à l'une des plusieurs températures (T_{MV}) d'aimant données à l'avance, si la deuxième valeur (I₂ₘₐₓ) maximum de courant est égale à une première valeur (I₁ₘₐₓ) maximum de courant de la courbe (25) caractéristique en fonction de l'une des plusieurs températures (T_{MV}) d'aimant données à l'avance.

6. Procédé (1) de détermination de la température suivant la revendication 4, dans lequel on estime la température (T_{MN}) d'aimant due au fonctionnement comme l'une la plus proche des plusieurs températures (T_{MV}) d'aimant données à l'avance, si la deuxième valeur (I₂ₘₐₓ) maximum de courant est inégale aux premières valeurs (I₁ₘₐₓ) maximum de courant respectives de la courbe (25) caractéristique en fonction des plusieurs températures (T_{MV}) d'aimant données à l'avance.

7. Procédé (1) de détermination de la température suivant l'une des revendications précédentes, dans lequel on effectue le fonctionnement (4) de test au repos du moteur (7) de test et le fonctionnement (14) normal au repos du moteur (17) de service.

8. Procédé (1) de détermination de la température suivant l'une des revendications précédentes, dans lequel les aimants (11) de test du moteur (7) de test et les éléments (18) du moteur (17) de service sont constitués sous la forme d'aimants permanents.

9. Procédé (1) de détermination de la température suivant l'une des revendications précédentes, dans lequel la deuxième surface (20) tension temps en fonctionnement (14) normal est égale à la première surface (9) tension temps en fonctionnement (4) de test.

10. Procédé (1) de détermination de la température suivant l'une des revendications précédentes, dans lequel les premiers angles (ϕ₁) sont en nombre et en valeurs angulaires respectifs égaux aux deuxièmes angles (ϕ₂).
